# EUROPEAN PATENT SPECIFICATION

(11) **EP 2 103 879 B1**
(45) Date of publication and mention of the grant of the patent: **29.07.2015**
(21) Application number: 08005300.2
(22) Date of filing: 20.03.2008
(51) Int. Cl.: F24D 3/18, F24H 1/10, F24H 9/20, F24D 12/02, F24D 19/08

(54) **Heater**
Heizer
Dispositif de chauffage

(43) Date of publication of application: 23.09.2009
(73) Proprietor: DAIKIN INDUSTRIES, LTD., Osaka-shi, Osaka 530-8323 (JP); Daikin Europe N.V., 8400 Oostende (BE)
(72) Inventor: Ghesquière, Mathieu, 8310 Brugge (BE); Van Thournout, Laurent, 8020 Oostkamp (BE)
(74) Representative: Hoffmann Eitle

(56) References cited:
- EP-A- 1 591 728
- EP-A- 1 684 019
- WO-A-99/40375
- DE-U1- 29 913 264
- GB-A- 2 167 842
- US-A- 4 185 187
- US-A- 4 604 515
- US-B1- 7 046 922

## Description

### Field of the Invention

The present invention is concerned with room heating system comprising a heater for heating a thermal distribution fluid. The heater includes a housing containing a heating element, which operates to heat the thermal distribution fluid as it follows a flow path from an inlet to the housing and an outlet from it.

### Background of the Invention

Room heating systems are in use all over the world to provide warmth to residential, commercial and industrial buildings. Known in such room heating systems are heaters as described above for heating a thermal distribution fluid as it circulates around a network of pipes to give off heat in heating units such as radiators and under-floor heating. In common use as the thermal distribution fluid is water.

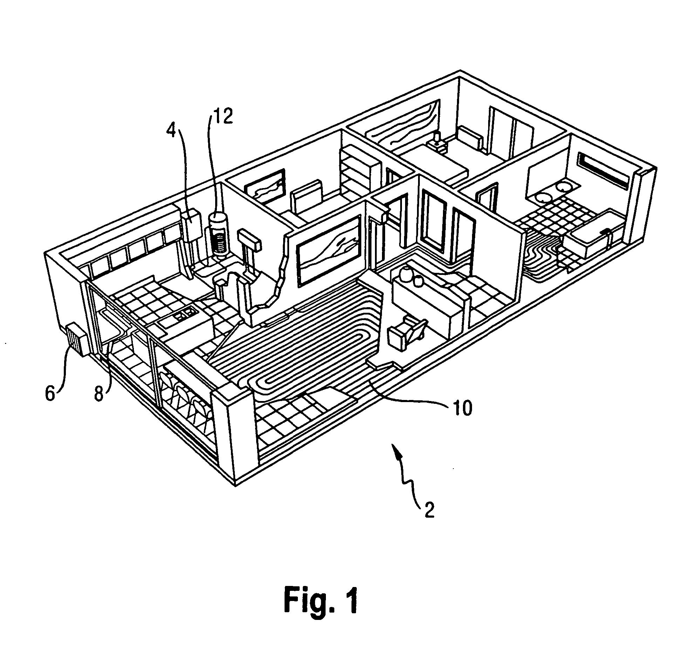

One application of a heater to which the present invention is particularly concerned is a backup heater in a heat pump based room heating system. A heat pump based room heating system is discussed below with reference to figure 1. As will become clear in the following, there may arise situations in which the heat pump can not efficiently or sufficiently provide the required heat to the water in the room heating system. In such a case, the backup heater is able to provide a heat boost to the water. The backup heater may, for example, be a backup heater with an electric heating element.

Although the present invention is particularly suited to a backup heater as given above, it is envisaged that the invention, which is about to be revealed, is applicable to all kinds of thermal distribution fluid heaters. For example, the invention would have application with a conventional boiler.

Room heating systems generally include a number of safety features. A system safety valve can be provided, which opens upon a predetermined pressure limit being exceeded to release some of the thermal distribution fluid and bring the pressure back below the predetermined limit and to a safe level. An expansion vessel may also be provided, which offers a volume change capability to accommodate increases and decreases in the volume of the fluid contained in the system as temperature and/or pressure changes. A gas release valve may also be provided, which allows air trapped in the part of the system to which it is attached to be released from the system. This prevents air pockets forming, which can adversely effect heat flow about the system.

The safety features are mounted at various places about the system, which can lead to manufacturing and maintenance difficulties.

GB 2167842 discloses a heater having a safety valve operable to automatically release a large increase in fluid pressure in a hollow casing of the heater. EP 1 684 019 A1 relates to a fluid-containment vessel comprising a fluid inlet and a fluid outlet into and out of the vessel, a coil accommodated within the vessel, the fluid-containment vessel being for containing the fluid as it follows a flow path from the inlet to the outlet, at least one safety feature connection including a passage through the housing, a pressure release valve connected to the passage through the housing, wherein the housing comprises opposed ends with a sidewall extending longitudinally therebetween and the coil is mounted to one of the ends and extends towards the other end and wherein at least one of the fluid inlet to the housing and the fluid outlet from the housing includes a passage through the sidewall, wherein the housing is mounted in a predetermined orientation, wherein the predetermined orientation is so that the longitude of the housing is substantially vertical, the system further comprises a roof space, the roof space further comprising a portion of the heating liquid piping and the heater mounted at a bottom part of the roof space and the roof space is provided such that the heater forms an uppermost fluid distribution medium containing component connected by the thermal distribution piping of the system.

It is an object of the present invention to overcome the above difficulties and provide an alternative arrangement that can provide more effective safety functionality.

### Summary of the Invention

The present invention provides a room heating system as defined in claim 1. The heater of the room heating system comprises a heating element and a housing for the heating element. The heater includes a thermal distribution fluid inlet into the housing and a thermal distribution fluid outlet from the housing. The housing is arranged to contain the thermal distribution fluid as it follows a flow path from the inlet to the outlet and over the heating element. The heater further includes at least one safety feature connection including a passage through the housing. The heater comprises a safety feature of the room heating system connected to an at least one safety feature connection. The safety feature is preferably responsive to the fluid contained by the housing.

Thus, a connection for a safety feature of a room heating system is integrated with a heater. A safety feature is connected to it. The safety feature may be responsive to the fluid contained by the housing. Preferably, the safety feature comprises a connection providing a passage through the housing into a fluid space contained by the housing, where a safety device is to be mounted to the connection. Mounting the safety feature to the housing can offer improved manufacturing possibilities. It has been found that the heater is particularly suitable for receipt of such features because it is where the thermal distribution fluid changes temperature, sometimes from a coldest temperature to a hottest temperature in its cycle. The heater has thus been found to be a site where any fault conditions in the system will be most keenly felt.

Preferably, the heater comprises a plurality of such safety feature connections and preferably a respective such safety feature connected thereto. Each connection provides a passageway into a space defined by the housing that, in use, contains fluid as it follows the flow path from the inlet to the outlet connection. The provision of a number of the safety features means the necessary manufacturing steps to install these safety features can be performed on one work piece. Maintenance may also be eased.

The at least one safety feature connection may comprise a connection to which an expansion vessel can be connected. The at least one safety feature connection does comprise a connection to which a gas release valve is connected, where the gas release valve is operable to release gas accumulated in the heater. The at least one safety connection may comprise a connection to which a system safety valve may be connected, where the system safety valve is adapted to open when a predetermined pressure in the fluid has been exceeded to release the excess pressure in the fluid. Preferably all of these safety features are provided.

The housing comprises opposed ends with a side wall extending longitudinally there between and the heating element is mounted to one of the ends and extends toward the other end. The at least one safety feature connection is mounted to the side wall.

Mounting the at least one safety feature connection to the side wall allows manufacturing to be further eased as space requirements are not so tight on the side wall as opposed to the end wall. This is particularly prevalent when it is considered that the heating element extends from one end to the other and is electrically connected at the first end, which makes space constraints at that end even more of an issue.

The housing comprises opposed ends with a side wall extending longitudinally there between and the heating element is mounted to one of the ends and extends toward the other end. The at least one of the fluid inlet to the housing and the fluid outlet from the housing extend through the side wall. This again builds on the concept that the sidewall offers a less constricted area to provide connections into the fluid space contained by the housing.

Further, the longitudinal extent of the heater can be reduced by providing the inlet and/or the outlet at the sidewall of the housing as opposed to the ends. This then opens up the possibility of mounting the heater sideways, but with the heater still being suitably compact. A side mount also allows a twist to be provided in the flow path between the inlet and the outlet connection, which can improve the heating efficiency of the heater.

The housing is mounted in a predetermined orientation, which orientation is generally sideways such that the longitude of the housing is horizontal. In this configuration, the inlet and the outlet extend through the sidewall in the housing as discussed above. This configuration allows the gas valve connection to extend through the sidewall of the housing at the top of the housing to reach any air that will accumulate there. This is a preferred feature of the invention.

The side oriented heater means that gas will accumulate longitudinally, which offers a large area for gas to be collected without the depth of the water significantly dropping and exposing the heating element. Heater exposure will thus only occur after a relatively large amount of gas has been collected. Further, mounting the heater sideways with the inlet and outlet connections at the bottom of the housing allows the gas to be centrally, in terms of the room heating system, accumulated and thus centrally released, thereby easing maintenance burdens. This will become clearer in the following.

The gas release valve connection is mounted to a longitudinal centre of the side wall of the housing, which is where the gas bubble will first start to accumulate when the heater is horizontally mounted. Thus, the gas valve can release the gas at an early stage of its formation.

The heater with integrated safety features described above may find particular application as a backup heater in an indoor unit for a room heating system powered by a heat pump. More generally, the present invention provides a room heating system comprising an indoor unit. In a heat pump implementation, the room heating system comprises a heat pump having refrigerant piping circulating a refrigerant, an indoor piping circulating a thermal distribution fluid and a heat exchanger for exchanging heat between the refrigerant in the refrigerant piping and the thermal distribution fluid in the indoor piping. The indoor unit comprises the heat exchanger and the heater described above.

The heater is preferably mounted in the predetermined, preferably horizontal, orientation discussed above. The heater is mounted at a top part of the indoor unit. This top mounting is made more feasible by downward extension of inlet and outlet pipes connected to the inlet and outlet connections.

The top mounting can be particularly advantageous for collecting air trapped in the piping. In fact, the indoor unit is mounted with respect to indoor piping of the room heating system such that the heater forms an uppermost fluid containing component connected by the indoor piping. The heater so mounted can thus form the collection point for any gas in the system, which, unhindered, will naturally rise to the highest point. Horizontally mounting the heater with the inlet and outlet connections at the bottom means that the air will accumulate where it can be centrally released, namely where the gas release valve connection is positioned.

There follows a detailed description of a preferred embodiment, with reference to the figures, of the heater where it is used as a backup heater in a heat pump based room heating system.

### Brief description of the drawings

Figure 1 shows a room heating system.
Figure 2 shows a backup heater mounted in an indoor unit of the room heating system.
Figure 3 shows a side view of the backup heater.
Figure 4 shows the backup heater if the outer housing could be seen through. A flow path is also shown.
Figure 5 shows trapped water in the bottom of the backup heater.
Figure 6 shows the backup heater including a baffle plate that has a drain hole.
Figure 7 shows a cross sectional view into a side of the indoor unit.
Figure 8 shows a view into the backup heater from one end.
Figure 9 shows a view of thermal safety devices from an outside of the backup heater.
Figure 10 shows the thermal safety devices extending into the inside of the backup heater.
Figure 11 shows the room heating system with a heat pump.

### Description of a preferred embodiment

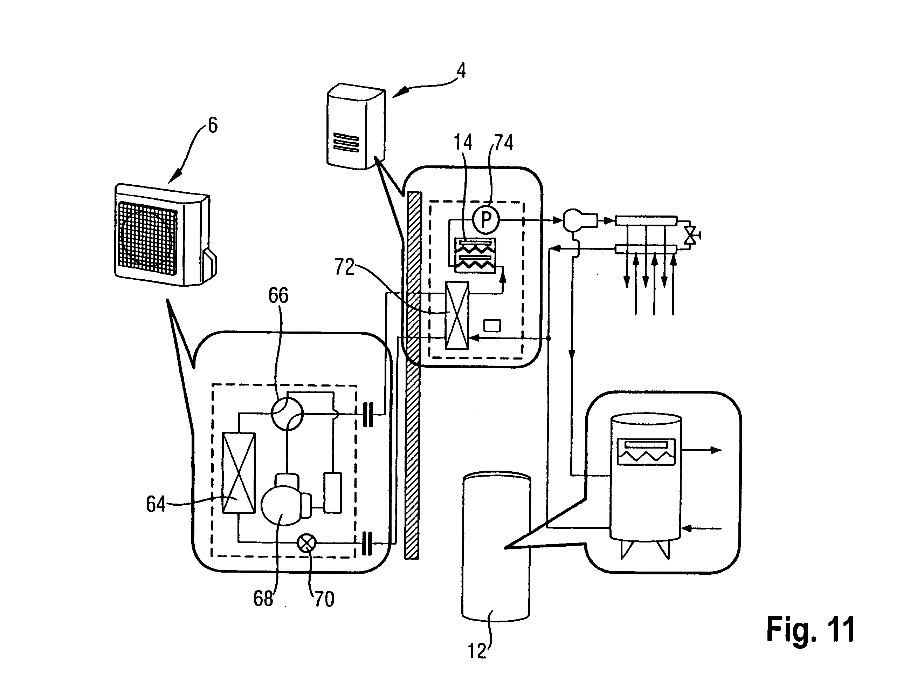

Figure 1 shows an exemplary room heating system 2. The system comprises an indoor unit 4, an outdoor unit 6, refrigerant piping 8 and room heating piping 10. The outdoor unit 6 is a heat pump of the known kind, and is briefly discussed in the context of the present room heating system below with reference to figure 11. The shown outdoor unit 6 is an air heat pump for extracting heat energy from the air, but may also be an under-soil heat pump for extracting under-soil heat energy or other types of heat pump known to the skilled reader.

The outdoor unit 6 comprises an evaporator 64, a four way valve 66, a compressor 68 and an expansion device 70, which is an electric valve. The indoor unit 4 comprises inter alia a pump 74 for circulating the water in the piping 10 and a condenser 72. These components form a heat pump. The evaporator 64, the four way valve 66, the compressor 68, the expansion device 70 and the condenser 72 are connected in this order by a refrigerant piping 8 (figure 1) circulating a refrigerant. The circulation of the refrigerant is forced by the compressor 68. In a heating mode, the refrigerant circulates clockwise in figure 11.

Liquid refrigerant leaves the condenser 72 at a first temperature T1 and passes through the expansion device 70, where the pressure of the refrigerant is reduced and the refrigerant is barely liquid. Afterwards, the refrigerant passes the evaporator 64 and is evaporated by heat from the outside atmosphere. After leaving the evaporator 64, the refrigerant passes through the compressor 68, where the pressure is increased. The refrigerant is at a temperature T2 at this point, which is greater than T1. Finally, the refrigerant is condensed in the condenser 72 by transferring heat from the refrigerant to water in the indoor piping 10 (figure 1) connected to the indoor unit 4.

In the heating mode, water enters the indoor unit 4, passes the condenser 72 in a heat exchanger. Here, heat is transferred to the water from the refrigerant. A pump 74 in the indoor unit 4 downstream of the backup heater 14 circulates the heated water which downstream of the pump 74 passes through a backup heater 14, discussed in more detail below, and then around the indoor piping 10 circuit.

Refrigerant piping 8, in which refrigerant material circulates, is connected between the indoor unit 4 and the outdoor unit 6. The room heating piping 10 shown is an under-floor arrangement, whereby heat is transferred from the water in the piping 10 up through the flooring and into a room space being heated. The room heating piping 10 may be arranged to be connected to wall mounted radiators (not shown) instead of or as well as arranged in an under-floor heating arrangement. The indoor unit 4 includes a heat exchanger to transfer heat from the refrigerant in the refrigerant piping 8 to water circulating in the room heating piping 10.

There is also shown as part of the system 2 of figure 1 a sanitary hot water tank 12 for heating sanitary water. The sanitary hot water tank 12 is not particularly relevant to an understanding of the present invention and thus will not be described further.

The outdoor unit 6, a heat pump, extracts low temperature energy from the environment and increases its temperature for heating purposes in a manner known to the skilled reader. The upgraded heat is then transmitted via the refrigerant to a heat exchanger in the indoor unit 4. The heat exchanger transfers the heat in the refrigerant to the water circulated in the room heating piping 10, which forms the under-floor heating arrangement and which may also be connected to heating radiators and the sanitary hot water tank 12.

Heat pumps operate more efficiently when the temperature differential between the heated refrigerant and the temperature of the environment from which the heat pump is extracting heat energy is kept small. It is known in the art to provide a backup heater so that the temperature differential can be kept small and the heat pump kept efficient, while still providing heating capacity to match the year round heating requirements of the room heating system 2. The heat pump is, for example, sized to provide 90 to 95 % of the annual heating requirement, with the remaining 5 to 10 % provided by a small electric backup heater. The backup heater may be sized to cover 60 % of the heating demand for the coldest day of the year. The present invention is concerned with such a backup heater, which is discussed fully below.

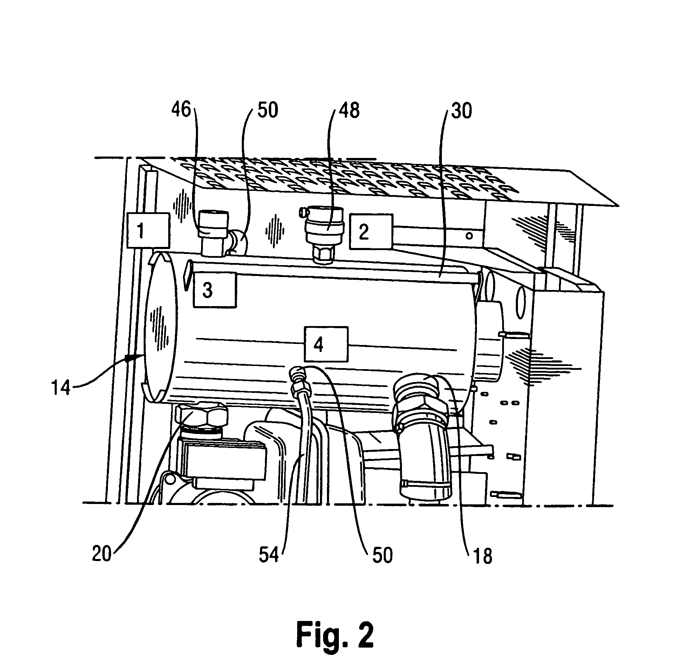

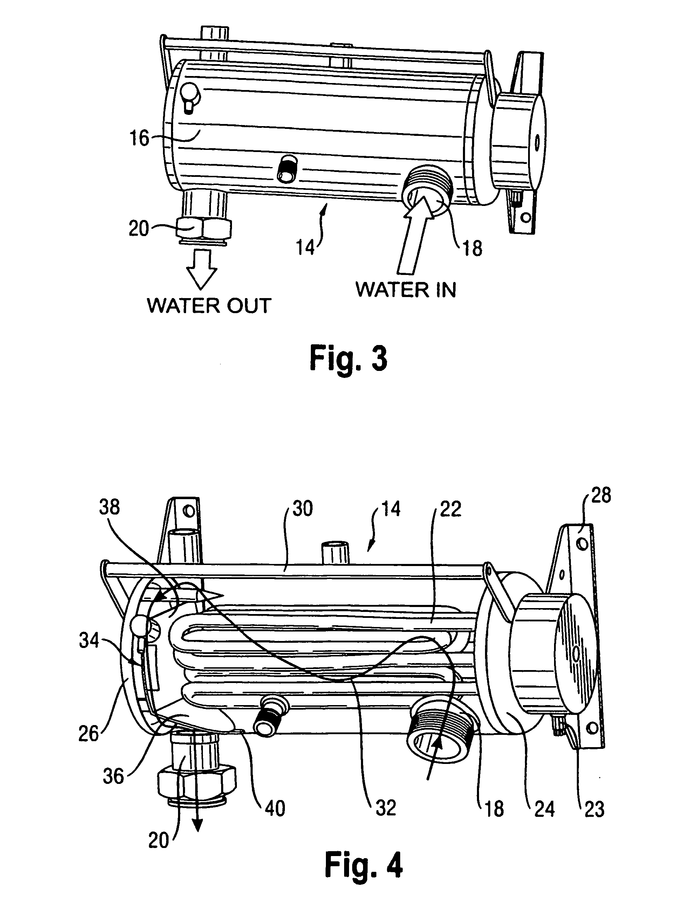

An exemplary backup heater 14 is shown in figure 2, 3 and 4. The backup heater 14 includes a tubular outer housing 16 (figure 3) closed at each end by a first end plate 24 and an opposed second end plate 26, which can be seen in figure 4. The backup heater 14 of figure 2 includes a thermally insulative outer cladding (not labelled, but shaded in black) about the outer housing 16 and the end plates 24, 26. The backup heater 14 includes a water inlet connection 18 and a water outlet connection 20. As can be seen in figures 3 and 4, the outer housing 16 and the end plates 24, 26 enclose a space that will, in use, be filled with water flowing between the inlet connection 18 and the outlet connection 20. An electric heating element 22 occupies the space (figure 4).

With reference to figure 4, the electric heating element 22 comprises one or more resistance heating filaments that become hot as electricity flows through them. The filaments are attached at both ends to the first end plate 24. The power cable 23 to the heating element 22 passes through the first end plate 24 and electrical circuitry connecting the heating element 22 to the power supply takes place in the first end plate 24. As can be seen, the first end plate 24 is deeper than the second end plate 26 in an axial direction so as to enclose the power circuitry for the heating elements and also to provide support for the heating element 22 attached to it. Each filament extends from the first end plate 24 almost all the way to the opposed second end plate 26. The filaments turn when in the proximity of the second end plate 26 and extend back to the first plate 24, where it either terminates at the first end plate 24 or where a further turn takes place. There can be a number of such turns to define a wave-like pattern as the heating filament extends from one end of the space inside the outer housing 16 and between the end plates 24, 26 to the other end.

The backup heater 14 includes a mounting bracket 28 connected to each end plate 24, 26. The mounting brackets are for mounting the backup heater 14 to the indoor unit 4, as will be discussed more fully below. The backup heater also includes a handling bar 30 connected at opposed ends to an end plate 24, 26. The handling bar 30 is positioned on the other side of the outer housing 16 to the mounting brackets 28 and is spaced radially from the outer housing 14. The handling bar 30 is useful for ease of assembly when mounting the backup heater 14 to the indoor unit 4.

A water flow path 32 will be defined between the inlet connection 18 and the outlet connection 20 when the backup heater 14 is in operation. It is desirable to have a flow path 32 that extends over as much as possible of a surface area of the heating element 22 so as to ensure adequate heating. The inlet connection 18 and the outlet connection 20 are positioned at longitudinal opposite ends of the outer housing 16, adjacent respective first and second end plates 24, 26 for this reason.

It is also considered desirable, for reasons that will become clear in the following, to have the inlet and outlet connection 18, 20 at a bottom of the outer housing 16. Top and bottom are used herein with respect to a top of the backup heater 14 and a bottom of it when it is properly horizontally mounted in the indoor unit 4. Alternatively, one can define bottom as where the inlet and outlet connections 18, 20 are and term top accordingly. Having the inlet and outlet connection 18, 20 at the bottom of the outer housing 16, however, provides a direct flow path from the inlet connection 18 to the outlet connection 20 that runs only or mostly along the bottom of the space enclosed by the outer housing 16 and the two end plates 24, 26. The upper part of the heating element 22 would not be optimally used to heat the water flowing between the inlet connection 18 and the outlet connection 20 in such a construction.

In order to address the above problem, the inlet and outlet connection 18, 20 are both provided in a bottom of the outer housing 16, but they are radially offset from one another by an amount of, for example 35° to 45°, as can be seen for example in figures 3, 4 and 7. In particular, the outlet connection 20 is provided at a bottom most position in the outer housing 16 and the inlet connection 18 is radially offset from this. This radial offset means that a more curved or spiral flow path will be provided between the inlet and outlet connection 18, 20, which can provide a more efficient heating of the water.

Further, and with reference to figure 4, the backup heater 14 includes a baffle plate 34 that blocks a direct flow path between the inlet connection 18 and the outlet connection 20 along the bottom of the space. The baffle plate 34 redirects the flow path 32 so that the water must flow over the top of it and thus to the top of the space enclosed by the backup heater 14 in order to reach the outlet connection 20.

The baffle plate 34 is spaced a small distance from the second end plate 26 of the backup heater 14 and mostly extends in a radial plane. The baffle plate 34 extends almost to the top of the space defined within the outer housing 16 and the end plates 24 and 26. A gap is thus defined between the top of the baffle plate 34 and the inner surface of a top of the outer housing 16. The baffle plate 34 has an outer periphery generally mating with an inner surface of the outer housing 16 so that water flow between the baffle plate 34 and the outer housing 16 is negligible or eliminated entirely.

With continued reference to figure 4, the baffle plate 34 includes an upper portion 38 extending in a generally radial plane and a bottom portion 36 that is bent to extend axially in the direction of the inlet connection 18 and downwardly to intersect with the inner surface of the bottom of the outer housing 16 between the outlet connection 20 and the inlet connection 18. The upper portion 38 extends in a radial plane that intersects the outlet connection 18 or is even beyond the outlet connection 18, closer to the second end plate 26. The upper portion 38 faces and is in close proximity to the turns in the filaments of the heating element 22. The bottom portion 36 is bent so as to extend to an inner surface of the outer housing 16 at a point between the inlet connection 18 and the outlet connection 20. The bend is such that while the upper portion 38 faces the heating element 22, the bottom portion 36 extends underneath it.

The bottom portion 36 extending axially toward the inlet connection 18 and downwardly to contact the inner surface of a bottom of the outer housing 16 in combination with the outer periphery of the bottom portion mating with the inner surface of the outer housing 16 results in the bottom portion 36 having the shown shape. Specifically, the bottom portion 36 tapers to a tip 40. The tip 40 contacts the inner surface of the outer housing 16 at the bottom most point.

A baffle plate 34 without the bend and extending only in a radial plane would define a large space between it and the second end plate 26. This would mean that the longitudinal extent of the backup heater 14 occupied by the heating element would be limited. The above described structure for the baffle plate 34 means that the heating element 22 can occupy an increased longitudinal extent of the backup heater 14, while still providing a flow path 32, and further that flow path 32 is a sufficiently large flow path, to the outlet connection 20. The bottom portion 36 provides an expanded volume as the water flows to the outlet connection 20 as compared to if the baffle plate 34 extended all the way to the bottom in its radial plane. This expanded volume as the water reaches the bottom of the backup heater 14 in the proximity of the outlet connection 20 means that pressure changes in the water, which would be undesirable, are avoided. The angle between the upper portion 38 of the baffle plate and the lower portion 36 should be selected so as to minimise such undesirable pressure changes.

The water flow path 32, still referring to figure 4, between the inlet connection 18 and the outlet connection 20 thus passes through the gap over the baffle plate 34 and to the outlet connection 20. The water flow path 32 also includes a spiral element to it as provided by the radially offset inlet and outlet connections 18, 20. Good heating efficiency is ensured by such a flow path 32. The water flow path 32, after passing over the baffle plate 34, flows in a space between the baffle plate 34 and the second end plate 26. The flow path 32 beyond the bend in the baffle plate 34 turns to conform to the bottom portion of the baffle plate and thus passes to the outlet connection 20.

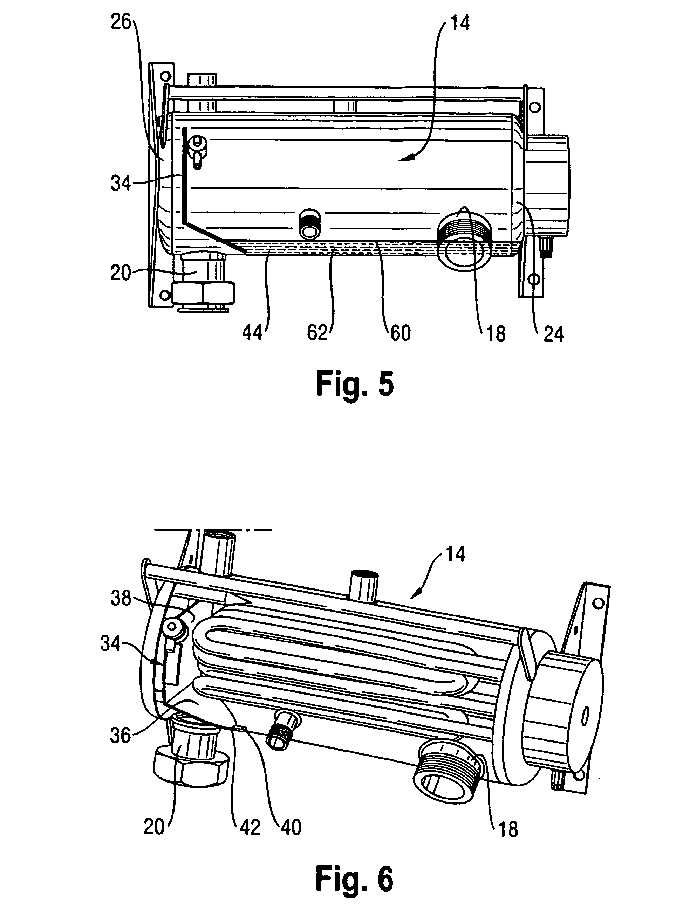

A draining process may need to be performed on the backup heater 14, for example after a production test has been run. Water to be drained can pass over the top of the baffle plate 34 and out of the outlet connection 20 to drain some of it.
A lot of the water will also pass through the inlet connection 18 during draining. There will, however, be an amount of water that could become trapped in the bottom most portion of the outer housing 16 and can not pass through the inlet connection 18 because the inlet connection 18 is radially offset from the bottom most portion. This body of water will also be prevented from passing to the outlet connection 20 by the presence of the baffle plate 34 blocking a flow path between the inlet and outlet connection 18, 20 along the bottom of the outer housing 16. The trapped water 62 can be viewed in figure 5 by a shaded region and where the level of the trapped water 62 is shown by the dark line 60 extending from the baffle plate 34 to the first end plate 24. The water level line 60 passes horizontally along the bottom at a height where the water level no longer communicates with the opening to the inlet connection 18.

In light of the above potential problem and with reference to figure 6, the baffle plate 34 includes a drain passage 42 through it, which is positioned at or adjacent the tip 40 of the bottom portion 36. The drain passage 42 is sufficiently small that it provides a negligible flow path in use to the outlet connection 20 as compared to the flow path 32 over the top of the baffle plate 34. The drain passage 42 ensures that the body of trapped water 62 in draining of the backup heater 14 has a way out.

It can be imagined that during a draining process, complete draining could be performed without tilting or other movement of the backup heater 14. A backup heater 14 full of water can drain water from the inlet and outlet connections 18, 20. The outlet connection 20 flow will drop to a negligible amount relative to the flow out of the inlet connection 18 once the water level drops below the top 54 of the baffle plate 34. The inlet connection 18 will continue to drain water from the backup heater 14 until the level drops below a lip of the inlet connection 18. It is at this point that the flow through the drain passage 42 to the outlet connection 20 becomes significant and finishes the draining of the backup heater 14.

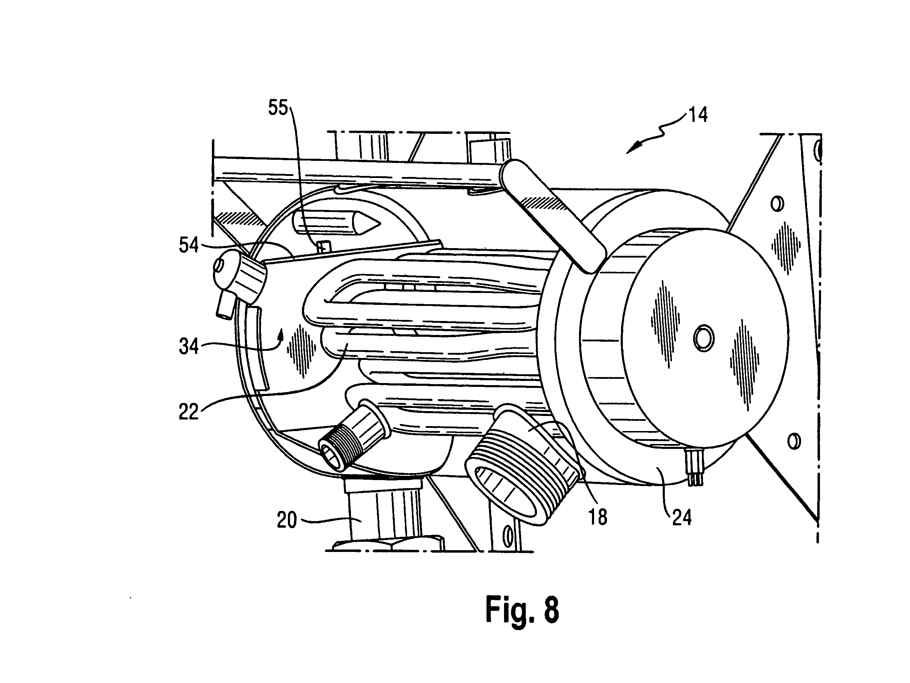

Referring to figure 8, the top 54 of the baffle plate 34 is shown. The top 54 extends to a radial height greater than a top of the heating element 22, but not so far as the top of the backup heater 14 so that the gap discussed above is still provided. If the backup heater 14 is horizontally mounted and the water contained in the space provided by the outer housing 16 and the end plates 24, 26 was slowly drained, the baffle plate should be revealed before the heating element 22. The backup heater 14 includes a flow switch 55 on the outlet connection 20 side of the baffle plate 14. A tip of the flow switch 55 is shown by the shaded box in figure 8. The skilled reader will appreciate that this illustration is purely schematic, presented for the purposes of giving an indication of where the flow switch might be positioned to achieve its function. In reality, the flow switch 55 may be arranged below the top 54 of the baffle plate and spaced from it, meaning it would be hidden from view by the baffle plate 34 in figure 8. If the water level in the backup heater 14 drops below the top 54 of the baffle plate 34 a reduced or absent water flow condition will be detected by the flow switch 55. A control system can react to the detected faulty flow condition by cutting the power to the heating element 22. The relative positioning between the top 54 of the baffle plate 34 and the top of the heating element 22 means that the power is cut before a heating element, which is still on, is exposed by the dropping water level. This could damage the backup heater 14.

The top 54 of the baffle plate 34 is shown as being flat. That is, the top 54 would be parallel with the water level in the backup heater 14 when the backup heater 14 is horizontally mounted. This means that the flow to the outlet connection 20 stops, rather than gradually reduces as would be the case with a curved top 54 to the baffle plate 34. The flow switch 55 can thus be of a relatively reduced sensitivity and still detect the dangerous water level condition immediately.

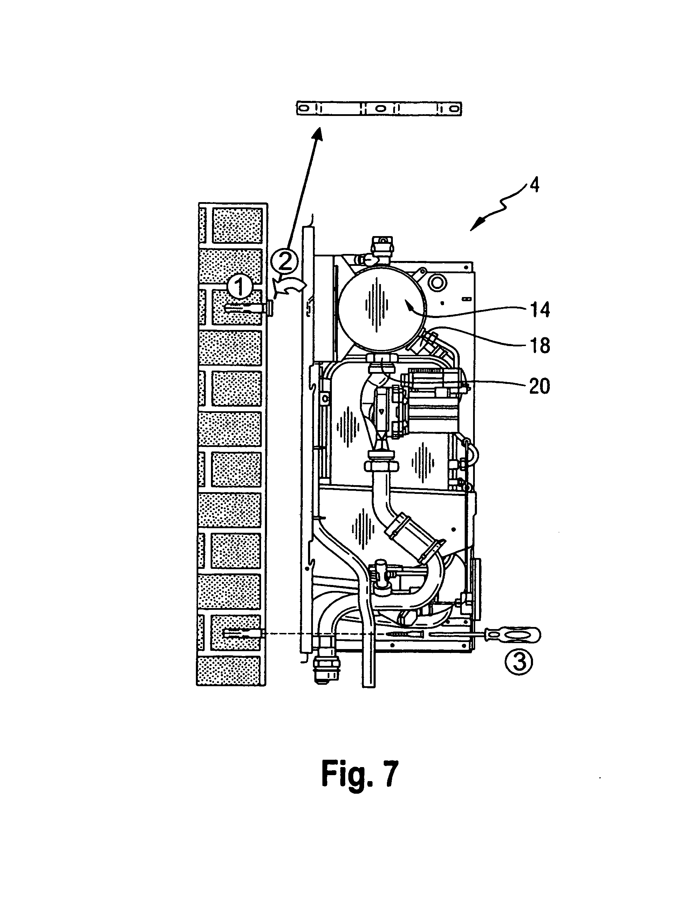

Referring to figure 7, a side view of the indoor unit 4 can be seen. The backup heater 14 is mounted at the top of the indoor unit 4. In fact, the indoor unit 4 is mounted such that the backup heater 14 is the topmost water containing component connected by the water piping 10 in the room heating system 2 for reasons that will become clear in the following. It is mounted horizontally, that is with its longitudinal axis in line with the horizontal, which can also be seen with reference to figure 2. The horizontal mounting is such that the outlet connection 20 is positioned at a radial bottom of the backup heater 14.

The backup heater 14 includes a number of safety connections through the outer housing 16 and these can be seen with reference to figure 2. The mounting brackets 28 are used to mount the backup heater 14 to the indoor unit 4 and the handling bar 30 makes the mounting process easier to manage.

With reference to figure 2, a connection for a system safety valve 46 is also provided, which is in liquid communication with the water in the backup heater 14. The connection for the safety valve 46 is positioned at the top of the outer housing 16, longitudinally positioned adjacent the outlet connection 20 on the inlet connection 18 side of the outlet connection 20. The valve 46 is of a known type, whereby once the pressure in the room heating system 2 reaches a certain degree that is predetermined to be unsafe, the valve opens and releases water and/or steam from the backup heater 14 and thus the system 2. The valve 46 is in communication with an outlet pipe 50 that transports the released fluid to a collection drain (not shown).

The backup heater 14 also includes a connection 50 for a pipe 54 leading to an expansion vessel (not shown). The connection 50 is provided between the inlet and outlet connections 18, 20 and in a lower half of the outer housing 16, radially just above the inlet connection 18. The connection 50 is in liquid communication with the water in the backup heater 14. An expansion vessel is known to the skilled reader. Briefly, an expansion vessel includes some means to accommodate volume changes in the water in the room heating system 2. For example, the expansion vessel can be a pressurised container including a flexible membrane providing a dividing line between a water side and a gas side in the container. The volume of the water can increase with increased temperature and the membrane will move against the gas to accommodate the volume change. The expansion vessel thus avoids large pressure increases.

The backup heater 14 also includes a gas release valve 48. Gas can become trapped in a water based room heating system 2. The gas can cause inefficient heating as it does not conduct heat as readily as liquid. It can also cause undesirable knocking noises in the piping 10 of the room heating system 2. The backup heater 14 is mounted as a top water containing component connected by the piping 10 in the room heating system 2, as discussed above. Gas will naturally rise in the room heating system 2 and so will make its way eventually into the backup heater 14. The gas release valve 48 allows the gas to be released from the room heating system 2 at a central point. The gas release valve 48 is mounted at the top of the outer housing 16 at a longitudinal centre and the backup heater 14 is mounted horizontally. Like in a spirit level, the gas bubble in a backup heater so arranged will collect in the position of the gas release valve 48 and so all gas can be released.

All of the safety connections 46, 48, 50 discussed above extend into a space contained by the backup heater 14 so that they communicate with the water therein. They extend through the tubular outer housing 16, where there is more space than at the end plates 24, 26.

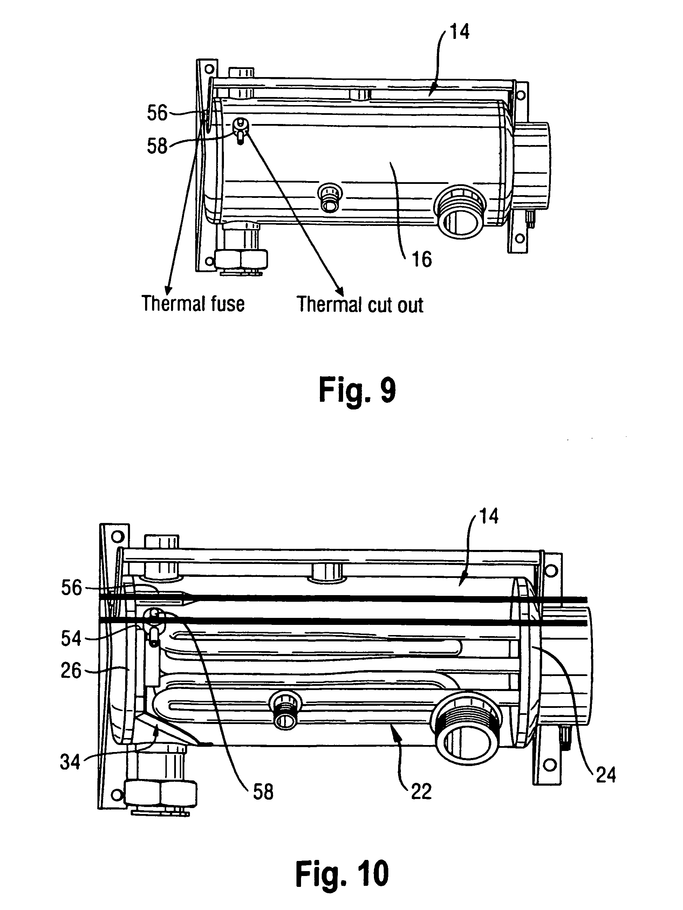

The backup heater 14 includes further important safety devices. The backup heater 14 includes a thermal fuse 56 and a thermal cut off device such as a thermostat 58, as can be seen in figure 9 and 10. The thermostat 58 is positioned at the top of the heating element 22 with respect to the horizontal, which means it is just below the top 54 of the baffle plate 34. The thermal fuse 56 is positioned above this point, above the top of the heating element 22.

The thermostat 58 includes a thermistor attached to the outer housing 16. The thermistor is axially located at about the end of the heating element 22 adjacent the second end plate 26. The thermostat 58 contacts the tubular outer housing 16 so that its thermistor can sense the temperature of the housing 16 and provide a control signal in response to the sensed temperature.

The thermal fuse 56 includes a fuse element that melts once it is exposed to a predetermined maximum temperature. The thermal fuse 56 must be replaced once this occurs. The thermal fuse 56 extends through the second end plate 26 to an axial position extending a small way past the end of the heating element 22 adjacent the second end plate 26. The thermal fuse 56 thus extends to an axial position beyond the axial position of the thermostat 58. The fuse element extends correspondingly inside the thermal fuse 56. The thermal fuse 56 lies in the flow path 32 as it passes through the gap between the top 54 of the baffle plate 34 and the top of the outer housing 16.

If the water level drops so that the heating element 22 is exposed, then the flowing water inside the backup heater will not dissipate the heat generated by the heating element 22. This can create dangerous over-heating of the backup heater 14. The flow switch 55 discussed above provides one safety mechanism against this danger. A control system is responsive to the temperature detected by the thermostat 58 and cuts the power to the heating element 22 if it goes above a predetermined safe limit. An air pocket will not cause system failure unless it exposes the heating element 22. The air pocket will, however, be at a lower temperature than the water. The positioning of the thermostat at the height of the heating element ensures that the housing temperature is sensed for as long as feasible before the heating element is exposed by the air pocket.

In the case that the water level drops below the top of the heating element 22, then the temperature that the thermal fuse 56 is subjected to could breach the maximum temperature safety limit. The thermal fuse 56 offers an immediate response to such a condition and is connected to the power supply to the heating element 22 so that the power supply is cut off in such an instance. The thermal fuse 56 will also be called into play in the case of malfunction of the thermostat 58.

An advantage of the use of a thermal fuse 56 in addition to a flow switch 55 and the thermostat 58 is that a further layer of safety response is provided. A temperature safety layer that is internal to the housing 16 and a temperature safety layer responsive to the housing temperature provides an effective safety response combination. Another advantage of the use of a thermal fuse is that if it is ever required, a fault in the backup heater 14 could very well be the problem. Simply resetting a flow switch or thermostat 58 would not solve the problem and may cause damage to the backup heater 14. An expired thermal fuse 56, on the other hand, will not work again and will need to be replaced. The replacement would generally be performed by a maintenance professional and the expired thermal fuse 56 would signify to the professional that the cause of the fault needs to be investigated before the thermal fuse 56 is replaced.

In use, the water travels around the piping 10 in the room heating system 2, releasing its heat to the room. The water enters a heat exchanger contained in the indoor unit 4 to collect heat provided by the outdoor unit 6, which is a heat pump. The water thus heated passes through the inlet connection 18 to the internal space of the backup heater 14 and passes out of the outlet connection 20 via a flow path 32. The flow path 32 has a twist induced in it by the radial offset between the inlet connection 18 and the outlet connection 20. The flow path 32 passes over the top of the baffle plate 34 and behind it towards the outlet connection 20. The flow path 32 to the outlet connection 20 then turns under the heating element 22 as directed by the bottom portion 36 of the baffle plate 34. The heating element 22 may or may not be switched on to provide a heat boost to the water. The turning on of the heating element 22 will be managed by a control system depending on whether peak demand conditions require it. The heated water then passes back into the piping 10 to fuel radiator or the under-floor heating 10.

All the while, the safety features are operable. So, any gas in the room heating system 2 will creep to the top most water containing component connected by the piping 10, namely the backup heater 14. This will be periodically released by a user or by a maintenance professional by operating the gas release valve 48. Changes in temperature in the water will result in volume changes that are accommodated by the expansion vessel. Specifically, the excess volume can pass from the backup heater 14 through the connection 50 to the expansion vessel via the pipe 54. In the case of a malfunction, the pressure of the water in the room heating system could become dangerously high. In this situation, the system safety valve 46 will open to release enough water from the backup heater 14 to bring the pressure back down to a safe operating level. The released water will drain through the drain pipe 50.

Further, dangerous temperature safety devices will also be operative in the case of water level drop. So, if the water level drops below the top 54 of the baffle plate 34 for any reason, for example because of excess gas accumulation in the top of the backup heater 14, the flow to the outlet connection 20 will cease. The flow switch 55 will recognise this and cut power to the heating element 22. The knowledgeable user, perhaps assisted by an instruction manual, could for example suspect the cause of the problem as excess gas build up and release it with the gas release valve 48.

If the water level suddenly drops to expose the heating element 22, the temperature to which the thermal fuse 56 is subjected would breach the predefined maximum. Power to the heating element 22 would be immediately cut by melting of the fuse element in the thermal fuse 56.

The thermostat 58, in normal operation of the backup heater 14, will provide a signal corresponding to a sensed temperature to a control system. The control system will keep the temperature of the housing of the backup heater 14 below an upper temperature limit based on a control algorithm. In exceptional cases, the thermostat 58 may not be operating correctly or the water level may have dropped to expose the heating element 22. Here, the thermal fuse will respond to cut the power to the heating element 22 to prevent temperatures being reached that could damage the backup heater 14 or other components of the room heating system 2.

## Claims

1. A room heating system (2), comprising:
a thermal distribution medium piping (10) formed to circulate a thermal distribution fluid; and
an indoor unit (4), the indoor unit comprising:
a heat exchanger (72), and
a portion of the thermal distribution medium piping and the heater (14);
**characterized in that** the heater (14) is
a backup heater comprising:
a heating element (22);
a housing (16) for the heating element;
a thermal distribution fluid inlet (18) into the housing (16) and a thermal distribution fluid outlet (20) from the housing (16);
the housing (16) for containing the thermal distribution fluid as it follows a flow path (32) from the inlet (18) to the outlet (20) and over the heating element (22);
at least one safety feature connection including a passage through the housing; and
a safety feature (46, 48, 50) connected to the safety feature connection;
wherein the housing (16) comprises opposed ends with a side wall extending longitudinally therebetween and the heating element (22) is mounted to one of the ends and extends towards the other end, and
wherein at least one of the fluid inlet (18) to the housing (16) and the fluid outlet (20) from the housing (16) include a passage through the side wall,
wherein the housing (16) is mounted in a predetermined orientation, and wherein the safety feature is a gas release valve (48) operable to release gas accumulated in the heater (14),
wherein the safety feature (48) is mounted at a top of the housing (16) where gas can accumulate in use and the inlet (18) and outlet (20) are positioned below the safety feature (48), and
wherein the predetermined orientation is so that the longitude of the housing (16) is substantially horizontal and the safety feature (48) is mounted to a longitudinal centre of the side wall, and wherein the heater (14) is mounted at a top part of the indoor unit (4) and the indoor unit (4) is mounted with respect to said thermal distribution piping (10) such that the heater (14) forms an uppermost fluid distribution medium containing component connected by the thermal distribution piping (10) of the system.

2. The system of claim 1, comprising a plurality of the safety feature connections.

3. The system of claim 2, comprising a plurality of safety features (46,48,50) of the room heating system (2) connected to a respective safety feature connection, wherein each safety feature (46,48,50) is responsive to the fluid contained by the housing (16).

4. The system of claim 2 or 3, wherein the safety features (46,48,50) comprise a system safety valve (46) adapted to open when a predetermined pressure in the fluid has been exceeded to release the excess pressure in the fluid.

5. The system of claim 2, 3 or 4, wherein the safety features comprise an expansion vessel.

6. The system of claim 5, wherein the indoor unit (4) comprises the expansion vessel and the expansion vessel is configured to change the volume of the thermal distribution fluid that can be accommodated by the piping in response to volume changes in the thermal distribution fluid.

7. The system of any one of the preceding claims, comprising:
a heat pump (6) having an outdoor evaporator (64);
a compressor (68);
a condenser forming a heat exchanger (72); and
an expansion device connected by refrigerant piping (8) in a cycle, the thermal distribution medium piping (10) formed to flow the fluid through the heat exchanger (72) between the refrigerant and the fluid, and the indoor unit (4) comprising the heat exchanger (72).

## Patentansprüche

1. Raumheizsystem (2) mit:
einer Leitung (10) für ein thermisches Verteilungsmedium (10), die dazu ausgestaltet ist, ein thermisches Verteilungsmedium in Umlauf zu bringen, und
einer Inneneinheit (4), die Inneneinheit mit:
einem Wärmetauscher (72) und
einem Abschnitt der Leitung für ein thermisches Verteilungsmedium und der Heizeinrichtung (14),
**dadurch gekennzeichnet, dass** die Heizeinrichtung (14)
eine Zusatzheizung ist mit:
einem Heizelement (22),
einem Gehäuse (16) für das Heizelement,
einem Einlass (18) für ein thermisches Verteilungsfluid in das Gehäuse (16) hinein und einem Auslass (20) für das thermische Verteilungsfluid aus dem Gehäuse (16),
wobei das Gehäuse (16) dazu dient, das thermische Verteilungsfluid zu enthalten, während dieses einem Flussweg (32) von dem Einlass (18) zu dem Auslass (20) und über das Heizelement (22) folgt,
wenigstens einer Sicherheitsmerkmalverbindung mit einem Durchlass durch das Gehäuse und
einem Sicherheitsmerkmal (46, 48, 50), das mit der Sicherheitsmerkmalverbindung verbunden ist,
wobei das Gehäuse (16) entgegengesetzte Enden mit einer Seitenwand, die sich längs zwischen diesen erstreckt, aufweist und das Heizelement (22) an einem der Enden angebracht ist und es sich zu dem anderen Ende erstreckt, und
wobei wenigstens einer unter dem Fluideinlass (18) zu dem Gehäuse (16) und dem Fluidauslass (20) von dem Gehäuse (16) einen Durchlass durch die Seitenwand aufweist,
wobei das Gehäuse (16) in einer vorher festgelegten Ausrichtung angebracht ist und
wobei das Sicherheitsmerkmal ein Gasfreisetzungsventil (48) ist, das betätigt werden kann, um Gas freizusetzen, das sich in der Heizeinrichtung angesammelt hat,
wobei das Sicherheitsmerkmal (48) oben an dem Gehäuse (16) angebracht ist, wo sich Gas bei Verwendung ansammeln kann und wobei der Einlass (18) und der Auslass (20) unterhalb des Sicherheitsmerkmals (48) positioniert sind, und
wobei die vorher festgelegte Ausrichtung so ist, dass die Länge des Gehäuses (16) im Wesentlichen horizontal ist und das Sicherheitsmerkmal (48) an einer längsgerichteten Mitte der Seitenwand angebracht ist, und
wobei die Heizeinrichtung (14) an einem oberen Teil der Inneneinheit (4) angebracht ist und die Inneneinheit (4) bezüglich der thermischen Verteilungsleitung (10) so angebracht ist, dass die Heizeinrichtung (14) eine oberste Komponente, die ein Fluidverteilungsmedium enthält, bildet, die durch die thermische Verteilungsleitung (10) des Systems verbunden ist.

2. System nach Anspruch 1, mit mehreren Sicherheitsmerkmalverbindungen.

3. System nach Anspruch 2, mit mehreren Sicherheitsmerkmalen (46, 48, 50) des Raumheizsystems (2), die mit einer jeweiligen Sicherheitsmerkmalverbindung verbunden sind, wobei jedes Sicherheitsmerkmal (46, 48, 50) auf das Fluid reagiert, das in dem Gehäuse (16) enthalten ist.

4. System nach Anspruch 2 oder 3, bei dem die Sicherheitsmerkmale (46, 48, 50) ein Systemsicherheitsventil (46) aufweisen, das dazu ausgestaltet ist, sich zu öffnen, wenn ein vorher festgelegter Druck in dem Fluid überschritten wurde, um den überschüssigen Druck in dem Fluid freizusetzen.

5. System nach Anspruch 2, 3 oder 4, wobei die Sicherheitsmerkmale ein Ausdehnungsgefäß aufweisen.

6. System nach Anspruch 5, wobei die Inneneinheit (4) das Ausdehnungsgefäß aufweist und das Ausdehnungsgefäß dazu ausgestaltet ist, das Volumen des thermischen Verteilungsfluids, das in der Leitung vorgesehen sein kann, aufgrund von Volumenveränderungen in dem thermischen Verteilungsfluid zu verändern.

7. System nach einem der vorhergehenden Ansprüche, mit:
einer Wärmepumpe (6) mit einem Außenverdampfer (64),
einem Kompressor (68),
einer Kondensiereinrichtung, die einen Wärmetauscher (72) bildet, und
einer Expansionseinrichtung, die mit einer Kühlleitung (8) in einem Zyklus verbunden ist, wobei die Leitung (10) für das thermische Verteilungsmedium dazu ausgebildet ist, das Fluid durch den Wärmetauscher (72) zwischen dem Kühlmittel und dem Fluid hindurch zu fließen und wobei die Inneneinheit (4) den Wärmetauscher (72) aufweist.

## Revendications

1. Système de chauffage de locaux (2), comprenant :
une tuyauterie de milieu de distribution thermique (10) formée pour faire circuler un fluide de distribution thermique ; et
une unité intérieure (4), l'unité intérieure comprenant :
un échangeur de chaleur (72), et
une partie de la tuyauterie de milieu de distribution thermique et le dispositif de chauffage (14) ;
**caractérisé en ce que** le dispositif de chauffage (14) est un dispositif de chauffage d'appoint, comprenant :
un élément de chauffage (22) ;
un boîtier (16) pour l'élément de chauffage ;
une entrée de fluide de distribution thermique (18) dans le boîtier (16) et une sortie de fluide de distribution thermique (20) à partir du boîtier (16) ;
le boîtier (16) pour contenir le fluide de distribution thermique à mesure qu'il suit un chemin d'écoulement (32) de l'entrée (18) à la sortie (20) et au-dessus de l'élément de chauffage (22) ;
au moins un raccordement d'organes de sécurité comportant un passage à travers le boîtier, et
un organe de sécurité (46, 48, 50) raccordé au raccordement d'organes de sécurité ;
dans lequel le boîtier (16) comprend des extrémités opposées avec une paroi latérale s'étendant longitudinalement entre celles-ci et l'élément de chauffage (22) est monté sur l'une des extrémités et s'étend vers l'autre extrémité, et
dans lequel au moins l'une de l'entrée de fluide (18) au boîtier (16) et de la sortie de fluide (20) du boîtier (16) comportent un passage à travers la paroi latérale,
dans lequel le boîtier (16) est monté dans une orientation prédéterminée, et
dans lequel l'organe de sécurité est une soupape de libération de gaz (48) pouvant fonctionner pour libérer un gaz accumulé dans le dispositif de chauffage (14),
dans lequel l'organe de sécurité (48) est monté au niveau d'une partie supérieure du boîtier (16) où un gaz peut s'accumuler en cours d'utilisation et l'entrée (18) et la sortie (20) sont positionnées au-dessous de l'organe de sécurité (48), et
dans lequel l'orientation prédéterminée est de sorte que la longitude du boîtier (16) soit substantiellement horizontale et l'organe de sécurité (48) soit monté sur un centre longitudinal de la paroi latérale, et
dans lequel le dispositif de chauffage (14) est monté au niveau d'une partie supérieure de l'unité intérieure (4) et l'unité intérieure (4) est montée par rapport à ladite tuyauterie de distribution thermique (10) de sorte que le dispositif de chauffage (14) forme un composant supérieur contenant un milieu de distribution de fluide raccordé par la tuyauterie de milieu de distribution thermique (10) du système.

2. Système de la revendication 1, comprenant une pluralité de raccordements d'organes de sécurité.

3. Système de la revendication 2, comprenant une pluralité d'organes de sécurité (46, 48, 50) du système de chauffage de locaux (2) raccordés à un raccordement d'organes de sécurité respectif, dans lequel chaque organe de sécurité (46, 48, 50) est sensible au fluide contenu par le boîtier (16).

4. Système de la revendication 2 ou 3, dans lequel les organes de sécurité (46, 48, 50) comprennent une soupape de sécurité de système (46) adaptée pour s'ouvrir lorsqu'une pression prédéterminée dans le fluide a été dépassée pour libérer la pression en excès dans le fluide.

5. Système de la revendication 2, 3 ou 4, dans lequel les organes de sécurité comprennent un vase d'expansion.

6. Système de la revendication 5, dans lequel l'unité intérieure (4) comprend la vase d'expansion et la vase d'expansion est configurée pour changer le volume du fluide de distribution thermique qui peut être logé par la tuyauterie en réponse à des changements de volume dans le fluide de distribution thermique.

7. Système de l'une quelconque des revendications précédentes, comprenant :
une pompe à chaleur (6) ayant un évaporateur extérieur (64) ;
un compresseur (68) ;
un condensateur formant un échangeur de chaleur (72) ; et
un dispositif d'expansion raccordé par une tuyauterie de réfrigérant (8) dans un cycle, la tuyauterie de milieu de distribution thermique (10) formée pour l'écoulement du fluide à travers l'échangeur de chaleur (72) entre le réfrigérant et le fluide, et l'unité intérieure (4) comprenant l'échangeur de chaleur (72).
